# EUROPEAN PATENT APPLICATION

(11) **EP 4 676 165 A1**
(43) Date of publication of application: **07.01.2026**
(21) Application number: 24185632.7
(22) Date of filing: 01.07.2024
(51) Int. Cl.: H05B 47/115, H05B 47/19, H05B 47/175, H04W 4/02, H04W 4/33, H04W 4/44, H04W 4/80, H04L 12/28

(54) **COMMUNICATION MODULE FOR A LIGHTING SYSTEM, LIGHTING SYSTEM AND ENTITY FOR A DIRECT WIRELESS COMMUNICATION BETWEEN TWO DEVICES**

(71) Applicant: Zumtobel Lighting GmbH, 6850 Dornbirn (AT)
(72) Inventor: Heim, Andreas, 6851 Dornbirn (AT); Steffens, Thomas, 6851 Dornbirn (AT)
(74) Representative: Beder, Jens

(57) **Abstract**

Communication module (10) for a lighting system (100) comprising a communication unit (11) for direct wireless communication with a device (20), and a control unit (12) for controlling the direct wireless communication. The control unit (12) is configured to determine presence of the device in response to the communication unit (11) establishing the direct wireless communication (A) with the device (20), and output to the lighting system a control command (B) and/or information (C) on the determined presence of the device in response to determining presence of the device. An entity (20) for direct wireless communication between two devices is disclosed configured to trigger the direct wireless communication, determine presence of one or more luminaires using information on signals communicated via the direct wireless communication, and trigger a transmission, via the direct wireless communication, of information on a desired light emission to at least one of the one or more luminaires, in response to determining presence of the one or more luminaires.

## Description

The present invention relates to a communication module for a lighting system, a lighting system and an entity for a direct wireless communication between two devices

A lighting system, such as multiple luminaires that may be controlled by a common control unit or a single luminaire, may provide lighting (i.e. a light emission) to an area. The lighting may be provided depending on the presence of a person. For this, the lighting system may typically comprise presence and/or movement sensors (such as passive infrared (PIR) sensors). Such sensors are relatively expensive compared to the costs for the whole lighting system. In addition, such sensors need a visual contact to the person to be detected, which may be disadvantageous with regard to the appearance of the lighting system, e.g. being a luminaire. Namely, in order to ensure a visual contact, a presence and/or movement sensor needs to either be installed on the outside of a luminaire being the lighting system or on a part of the lighting system or the luminaire requires an opening in its housing, e.g. in the form of a window, for enabling the visual contact. In the case of ceiling luminaires, typically the light emission area (via which the luminaire emits the light) is used for allowing the visual contact of the presence and/or movement sensor being installed inside the luminaire's housing. This has a significant impact on the luminaire's optical appearance.

Therefore, it is an object of the present invention to provide an alternative to the use of presence and/or movement sensors requiring visual contact, such as PIR sensors, in lighting systems for determining presence of a person and, thus, allowing a light emission of the lighting system in dependence on the determined presence of the person. Especially, it is an object of the present invention to provide such a solution that overcomes or at least reduces one of the above described disadvantages with regard to costs, requiring a visual contact and impact on the optical appearance of the lighting system.

These and other objects, which become apparent upon reading the following description, are solved by the subject-matter of the independent claim. The dependent claims refer to preferred embodiments of the invention.

According to a first aspect of the invention a communication module for a lighting system is provided. The communication module comprises a communication unit for a direct wireless communication with a device. The communication module comprises a control unit for controlling the direct wireless communication with the device. The control unit is configured to determine presence of the device in response to the communication unit establishing the direct wireless communication with the device. The control unit is configured to output to the lighting system at least one of a control command and an information on the determined presence of the device, in response to determining the presence of the device.

The use of the communication module in the lighting system for determining the presence of a device allows determining the presence of a person being associated with the device (e.g. the person carrying the device or holding the device). This is cheaper compared to using a typical presence and/or movement sensor, such as a PIR sensor, for determining the presence of the person. Especially, equipment (such as luminaires, user devices etc.) that already comprise a communication unit for direct wireless communication in order to wirelessly communicate information do not need to be adapted, e.g. by adding a presence and/or movement sensor to the equipment, in order to be configured to determine presence of an object, such as a person, carrying the device. Moreover, the direct wireless communication does not require a visual contact from the communication module to the device in order to take place. This allows arranging the communication module at or in the housing of a luminaire without having an impact on the visual appearance of the luminaire. In addition, a person carrying the device that would be shielded from a direct visual contact (e.g. by sitting in a vehicle) may be detected using the direct wireless communication. This would be not possible using a PIR sensor that requires a visual contact to the person.

The lighting system may be a luminaire. In this case the control unit may be configured to output the information and/or the control command to the luminaire, optional a bus (e.g. DALI or DALI-2 bus) of the luminaire. Herein, a bus may be a wired bus. The lighting system may comprise a bus, such as a DALI or DALI-2 bus, and one or more luminaires connected to the bus. In this case the control unit may be configured to output the information and/or the control command to the bus. For example, the control command may instruct the lighting system to start light emission e.g. at a certain light level (i.e. with a certain light intensity) and/or to adjust light emission of the lighting system (e.g. increasing the light intensity when presence is determined). Optionally, the control command may instruct the lighting system to emit light according to a lighting configuration. The aforementioned information may be communicated using the direct wireless communication from the device.

The direct wireless communication is a wireless communication usable for a distance determination. Especially, the direct wireless communication is a wireless communication that by default allows performing or performs a distance measurement and, thus, a distance determination. The term "point-to-point-ranging" may be used as a synonym for the term "direct wireless communication". The direct wireless communication may be a direct wireless communication using radio waves. Thus, the direct wireless communication may be referred to as "direct radio communication". Direct wireless communication means that the communication module and the device may wirelessly communicate with each other without using a further entity, such as a backbone, a server, a central management unit, a cloud etc., via which the wireless communication is done.

Herein, a control unit may comprise or be at least one of a processor, microprocessor, controller, microcontroller, application specific integrated circuit (ASIC) and field programmable gate array (FPGA). The present invention is not limited thereto and, thus, any other known type of control unit may be used.

The information on the determined presence of the device may be in the form of data, such as sensor data, usable in the lighting system.

The control unit may be configured to output to the lighting system the information on the determined presence of the device such that the communication module acts (from the perspective of the lighting system) as a presence and/or movement sensor or simulates (from the perspective of the lighting system) a presence and/or movement sensor. That is, the information output by the control unit of the communication module to the lighting system may correspond or be in line with information provided by a presence and/or movement sensor (e.g. PIR sensor) in response to detecting presence. In other words, the control unit may be configured to output to the lighting system the information on the determined presence of the device such that the communication module simulates a presence and/or movement sensor.

Optionally, the control unit is configured to determine the presence of the device in response to the communication unit receiving a wireless signal initiating the direct wireless communication with the device.

This has the advantage that the device does not need to be constantly supplied with electrical energy and, thus, may be a mobile device (e.g. portable device) comprising a battery (optional rechargeable battery) as an energy supply. Namely, when the device initiates the direct wireless communication by transmitting the aforementioned wireless signal, then the communication module may be in a state ready for receiving the wireless signal and the device does not need to be in such a state. As a result this reduces an electrical energy consumption at the device compared to the case where the device is in a state ready for receiving the wireless signal initiating the direct wireless communication. Thus, optionally the device may be configured to initiate the direct wireless communication between the communication module and the device.

Optionally, the control unit is configured to determine the presence of the device in response to the communication unit receiving an acknowledgement of a wireless signal transmitted by the communication unit to the device, wherein the wireless signal initiates the direct wireless communication.

Optionally, the control unit is configured to determine a distance to the device using the direct wireless communication with the device. The control unit may be configured to output to the lighting system at least one of an information on the determined distance, a control command in response to the determined distance being smaller than a threshold for the distance, and a control command that depends on the determined distance.

This allows controlling light emission of the lighting system in dependence on the distance determined between the communication module and the device. For example, in case the communication module is arranged in a luminaire (being the lighting system), then the control unit being configured to determine the distance (from the luminaire to the device) allows controlling the light emission of the luminaire in dependence of the determined distance. For example, in case the determined distance is smaller than the threshold for the distance then the control unit may determine that the device is a distance away from the luminaire, for which a light emission is desired. Therefore, the control unit may output this information on the determined distance to the luminaire, e.g. a control unit of the luminaire, allowing the luminaire to control light emission accordingly. This allows the control unit of the luminaire to control the light emission of the luminaire in dependence on the determined distance. For example, the smaller the determined distance to the device the greater the light intensity of the light emission of the luminaire and vice versa. When the device is carried by a person, this allows the lighting system (e.g. a luminaire or a luminaire of multiple luminaires) to start emitting light when the person is close enough and/or increase the light emission the smaller the determined distance and vice versa.

Optionally, the communication unit is configured to communicate with the device using as the direct wireless communication at least one of ultra wideband (UWB) communication and Bluetooth communication.

In other words, the direct wireless communication may be UWB communication and/or Bluetooth communication. UWB communication allows a more accurate distance determination compared to Bluetooth communication. During UWB communication a pulse signal may be transmitted between a transmitter and receiver and the run-time of the pulse signal allows determining the distance between the transmitter and receiver. The terms "run-time" and "time of flight" may be used as synonyms.

Optionally, the communication module is configured to receive via the direct wireless communication from the device information on at least one of an identity of the device, an identity of a person associated with the device, and desired parameters of a light emission of the lighting system. The control unit may be configured to output to the lighting system at least one of at least a part of the received information, and a control command that depends on at least a part of the received information.

The direct wireless communication has the advantage that in addition to determining presence of the device and, thus, a person carrying the device and optionally the distance between the communication module and the device, information may be communicated between the communication module and the device via the direct wireless communication. Thus, the communication module may be configured to transmit information to the device via the direct wireless communication and receive information from the device. This allows customizing a control of a light emission of the lighting system, when the presence of the device and e.g. of a person carrying the device is determined. For example on the device desired parameters of light emission of the lighting system and/or an identity of the device and/or an identity of the person associated with the device may be stored. At least one of the aforementioned stored information may be transmitted from the device to the communication module and, thus, be forwarded to the lighting system (e.g. a luminaire of which the communication module may be part) and/or in dependence of which the control unit of the communication module may output to the lighting system a control command (e.g. instructing light emission in line with the communicated identity and/or desired parameters). The aforementioned transmission of information from the device to the communication module may occur at the same time of the distance measurement (i.e. the same time when the control unit determines using the direct wireless communication the distance to the device). The communication of the information allows for example the lighting system to set a lighting scene (e.g. lighting mood) in dependence on the received information, e.g. different lighting scenes for different persons depending on the communicated identity of the device and/or the person.

Optionally, the communication module and/or lighting system may comprise different light emission profiles for different identities of the device and/or person associated with the device. For example, in case the device is a mobile device, such as a smartphone, that is carried by a person in an indoor area (e.g. inside a storage hall) and the person wants to shortly look something up on the smartphone, the desired light emission of the lighting system may be different compared to a case, where the device is part of a vehicle, such as a forklift, that moves and works in the indoor area and, thus, requires a greater area to be illuminated by the lighting system. In the aforementioned first case, determining presence and optionally the distance to the device corresponds to determining the presence and optionally the distance to the person, respectively. In the aforementioned second case, determining presence and optionally the distance to the device corresponds to determining the presence and optionally the distance to the vehicle, respectively.

Optionally, the control unit of the communication module may output, as the control command, an output of a control interface, such as a push-button or light switch, in response to receiving a desired light emission configuration or light emission profile. For this, the control unit may be configured to evaluate the information received from the device. For example, for a certain desired light emission scene, the control unit may be configured to simulate pushing of a push-button. In the lighting system, the aforementioned simulated pushing of the push-button may be associated with a light emission profile for the certain desired light emission. This allows controlling the lighting system to provide a desired light emission, like a push-button or light switch may trigger in a room the desired light emission. Optionally, multiple different light emission configurations or light emission profiles may be associated to multiple different push-buttons or light switches. In this case, the control unit of the communication module may be configured to simulate a push-button or light switch that is associated to a light emission configuration or profile of the multiple different light emission configurations or profiles, which is comprised by the received information (received by the communication unit).

In order to achieve the communication module according to the first aspect of the present invention, some or all of the above described optional features may be combined with each other.

According to a second aspect of the invention a lighting system is provided. The lighting system comprises a communication module according to the first aspect of the present invention, as described above, and one or more light sources.

The lighting system may be a luminaire and the one or more light sources may be one or more light source of the luminaire, such as one or more light emitting diodes (LEDs). Alternatively, the lighting system may be or comprise multiple luminaires.

Optionally, the lighting system comprises one or more operating devices for operating the one or more light sources. The control unit of the communication module may be configured to output to the one or more operating devices a control command to control the one or more operating devices, in response to determining the presence of the device.

Optionally, the lighting system comprises a control unit for controlling the one or more light sources. The control unit of the communication module may be configured to output, to the control unit of the lighting system, at least one of a control command and an information on the determined presence of the device, in response to determining the presence of the device.

In order to achieve the lighting system according to the second aspect of the present invention, some or all of the above described optional features may be combined with each other.

The above description with regard to the communication module according to the first aspect of the present invention is also valid for the lighting system according to the second aspect of the present invention, especially for the communication module of the lighting system. The description of the lighting system of the second aspect is valid for the lighting system described with regard to the communication module of the first aspect.

The lighting system according to the second aspect achieves the same advantages as the communication module according to the first aspect.

According to a third aspect of the invention an entity for a direct wireless communication between two devices is provided. The entity is configured to trigger the direct wireless communication. The entity is configured to determine presence of one or more luminaires using information on signals communicated via the direct wireless communication. The entity is configured to trigger a transmission, via the direct wireless communication, of information on a desired light emission to at least one of the one or more luminaires, in response to determining the presence of the one or more luminaires.

Optionally, the entity is configured to trigger as the direct wireless communication at least one of UWB communication and Bluetooth communication.

Optionally, the entity is configured to determine, using the information on signals communicated via the direct wireless communication, a closest visible luminaire of the one or more luminaires and/or one or more luminaires within a radius. The entity may be configured to trigger a transmission, via the direct wireless communication, of the information on the desired light emission to the determined closest visible luminaire and/or the determined one or more luminaires within the radius.

Optionally, the entity is a software that is configured to be performed on a user device comprising a communication unit for the direct wireless communication. For example, the software may be an application (i.e. app).

The user device is a mobile device, i.e. it may be moved, for example worn on the body, in a bag, at clothes, carried by a person etc. For example, the user device may be a tablet, a mobile telephone, a smartphone, a laptop, a smart watch etc. The aforementioned radius may be a radius around the user device.

Optionally, the entity is a device comprising a communication unit for the direct wireless communication.

The device may be a user device, such as a mobile user device. The device may be a dedicated device. The aforementioned radius may be a radius around the device.

Optionally, the communication unit is configured to wirelessly communicate using Bluetooth communication. The entity may be configured to trigger the communication unit to transmit Bluetooth signals, and determine presence of one or more luminaires using information on received Bluetooth signals. The entity may be configured to trigger the communication unit to transmit the information on the desired light emission to at least one of the one or more luminaires, in response to determining the presence of the one or more luminaires.

The term "wireless Bluetooth signal" may be used as a synonym for the term "Bluetooth signal". The Bluetooth signals received by the communication unit may have been transmitted by the one or more luminaires, e.g. in response to the Bluetooth signals transmitted by the communication unit.

Optionally, the entity is configured to determine the closest visible luminaire of the one or more luminaires using the information on received Bluetooth signals, and trigger the communication unit to transmit the information on the desired light emission to the determined closest visible luminaire. For this, the entity may be configured to determine, using the information on the received Bluetooth signals, the distances to the one or more luminaires and determine the luminaire, to which the distance is smallest among the determined distances, to be the closest visible luminaire. Optionally, instead of the closest visible luminaire one or more luminaires within a radius around the entity may be determined using the information on the received Bluetooth signals. The description with regard to the closest visible luminaire is accordingly valid.

Optionally, the communication unit is configured to wirelessly communicate using UWB communication and Bluetooth communication. The entity may be configured to trigger the communication unit to transmit Bluetooth signals, and determine presence of one or more luminaires using information on received Bluetooth signals. The entity may be configured to trigger the communication unit to transmit UWB signals to the one or more luminaires, determine the closest visible luminaire of the one or more luminaires using the information on received UWB signals, and trigger the communication unit to transmit the information on the desired light emission to the determined closest visible luminaire.

The term "wireless UWB signal" may be used as a synonym for the term "UWB signal". The Bluetooth signals received by the communication unit may have been transmitted by the one or more luminaires, e.g. in response to the Bluetooth signals transmitted by the communication unit. The UWB signals received by the communication unit may have been transmitted by the one or more luminaires, e.g. in response to receiving UWB signals from the communication device. For determining the closest visible luminaire of the one or more luminaires using the information on received UWB signals, the entity may be configured to determine, using the information on the received UWB signals, the distances to the one or more luminaires and determine the luminaire, to which the distance is smallest among the determined distances, to be the closest visible luminaire. Optionally, instead of the closest visible luminaire one or more luminaires within a radius around the entity may be determined using the information on the received UWB signals. The description with regard to the closest visible luminaire is accordingly valid.

In order to achieve the entity according to the third aspect of the present invention, some or all of the above described optional features may be combined with each other.

The above description with regard to the communication module according to the first aspect of the present invention and the lighting system according to the second aspect of the present invention is also valid for the entity according to the third aspect of the present invention. The description of the entity according to the third aspect of the invention is also valid for the communication module of the first aspect and the lighting system of the second aspect. For example, the device described with regard to the communication module of the first aspect (i.e. the device with which the communication module is configured to establish the direct wireless communication) may be or may comprise the entity according to the third aspect.

The entity according to the third aspect achieves the same advantages as the communication module according to the first aspect.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a communication module according to an embodiment of the present invention for a lighting system;
- **FIG. 2**: shows an example of a lighting system according to an embodiment of the present invention;
- **FIG. 3 (a)**: shows an example of the lighting system of FIG. 2;
- **FIG. 3 (b)**: shows an example of the lighting system of FIG. 2;
- **FIG. 4**: shows an example of an entity according to an embodiment of the present invention for a direct wireless communication between two devices;
- **FIG. 5**: shows an example of the entity of FIG. 4
- **FIG. 6**: shows an example of the communication module of FIG. 1 and the lighting system of FIG. 2 as well as examples of the entity of FIG. 4.

In the FIGs., corresponding elements have the same reference signs.

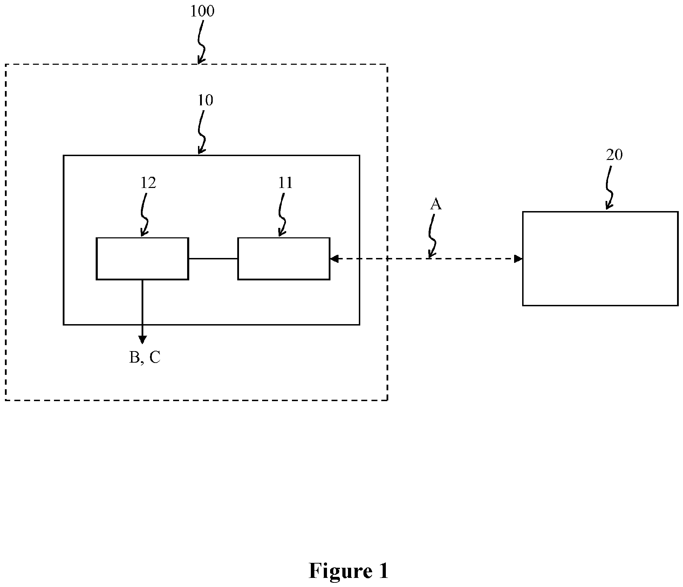

**FIG. 1** shows an example of a communication module according to an embodiment of the present invention for a lighting system. The communication module of FIG. 1 is an example of the communication module according to the first aspect of the present invention. Thus, the description of the communication module according to the first aspect is correspondingly valid for the communication module of FIG. 1.

The communication module 1 of FIG. 1 is a communication module for a lighting system 100. The lighting system 100 may be for example a luminaire. Alternatively, the lighting system 100 may comprise a bus, such as a DALI or DALI-2 bus, and one or more luminaires connected to the bus. The present invention is not limited to a specific lighting system and, thus, the lighting system 100 may be any known lighting system comprising one or more light sources for light emission.

The communication module 10 comprises a communication unit 11 for a direct wireless communication with a device 20, wherein in FIG. 1 the direct wireless communication between the communication unit 11 and the device 20 is represented by a dashed two-sided arrow that is labelled with the reference sign "A". The communication module 10 comprises a control unit 12 for controlling the direct wireless communication A with the device 20. That is, the control unit 12 is configured to control the communication unit 11 and, thus, is configured to communicate using the communication unit 11 via the direct wireless communication A with the device 20. The control unit 12 is configured to determine presence of the device 20 in response to the communication unit 11 establishing the direct wireless communication A with the device 20. That is, the control unit 12 is configured to determine presence of the device 20 as a result of determining that the direct wireless communication between the communication unit 11 and the device 20 is established. The control unit 12 is configured to output to the lighting system 100 at least one of a control command B and an information C on the determined presence of the device 20 in response to determining the presence of the device 20. That is, the control unit 12 is configured to output to the lighting system 100 the control command B and/or the information C on the determined presence of the device 20 as a result of determining the presence of the device 20.

For example, the control unit 12 being configured to output to the lighting system 100 the information C on the determined presence of the device 20 may be configured to behave as a presence sensor, i.e. output information in line with information that would be output by a presence and/or movement sensor detecting the presence of the device 20. Herein, control commands may be control commands according to the digital application lighting interface (DALI) standard and/or DALI-2 standard. The terms "DALI version 1" and "DALI version 2" may be used as synonyms for the terms "DALI" and "DALI-2", respectively. DALI and DALI-2 are well known in the field of lighting and, thus, no further details are described with regard to them.

The control unit 12 of the communication module 10 may be configured to determine the presence of the device 20 in response to the communication unit 11 of the communication module 10 receiving a wireless signal initiating the direct wireless communication A with the device 20. In other words, the device 20 may initiate the direct wireless communication A between the communication module 10, especially the communication unit 11, and the device 20 by transmitting a wireless signal that initiates this communication (e.g. the wireless signal comprising information that initiates the direct wireless communication), wherein upon receiving (by the communication unit 11) the wireless signal the control unit 12 may determine that the device 20 is present. That is, as a result of the communication unit 11 receiving the aforementioned wireless signal the control unit 12 knows that the device 20 is present and, thus, determines the presence of the device 20. For this the control unit 12 is configured to obtain respective information from the communication unit 11.

The control unit 12 may be configured to determine a distance to the device (i.e. the distance between the communication unit 11 and the device 20) using the direct wireless communication A with the device 20 (i.e. the direct wireless communication between the communication unit 11 and the device 20). Especially, the control unit 12 may process and evaluate one or more characteristics (such as amplitude, phase, frequency, time of flight, attenuation etc.) of wireless signals transmitted and received during the direct wireless communication A with the device 20 to determine the distance to the device 20.

For example, the direct wireless communication A may be an UWB communication, such as UWB communication according to IEEE 802.15.4(z) and/or the fine ranging (FiRa) standard. The control unit 12 may be configured to determine the distance to the device 20 using time of flight of the wireless signals (e.g. UWB signals). For example, the control unit 12 may be configured to use two way ranging (TWR). This is not limited to UWB communication and may be used for different types of direct wireless communication. The control unit 12 may be configured to determine the distance to the device 20 using the signal strength of received wireless signals, e.g. the received signal strength indicator (RSSI). Another option would be to use a phase-based ranging method like "Channel Sounding" which is expected to be introduced in Bluetooth in Fall 2024. The direct wireless communication may be a Bluetooth communication, such as iBeacon and/or Eddystone beacon. The Bluetooth communication may be Bluetooth-Low-Energy (BLE) communication. Thus, the communication unit 11 may be configured to communicate with the device 20 using as the direct wireless communication at least one of UWB communication and Bluetooth communication (e.g. BLE communication). The present invention is not limited to UWB communication and/or Bluetooth communication and, thus, any other kind of direct wireless communication may be used. The above description on examples on how to determine a distance using Bluetooth or UWB communication is valid for any element, device or control unit, described herein and being configured to determine a distance using the direct wireless communication, e.g. Bluetooth communication and/or UWB communication.

The control unit 12 may be configured to output to the lighting system 100 at least one of an information C on the determined distance, a control command B in response to the determined distance being smaller than a threshold for the distance, and a control command B that depends on the determined distance.

Outputting the determined distance to the lighting system 100 allows the lighting system to control, e.g. set or adjust, it light emission in dependence on the determined distance. For example, in case the lighting system 100 is a luminaire and e.g. the communication module 10 is part of the luminaire (e.g. arranged inside a housing of the luminaire), the determined distance is the distance from the luminaire to the device 20. Thus, the luminaire may control its light emission in dependence of the determined distance such that the smaller the determined distance and, thus, the closer the device 20 to the communication module 10, the greater the light intensity of the light emission of the luminaire and vice versa. The control command B may instruct the lighting system 100 to start a light emission and/or provide a light emission with a corresponding characteristic (e.g. corresponding light intensity). The control command B that depends on the determined distance may instruct for example a light emission with a light intensity that increases with decreasing determined distance and vice versa. That is, the smaller the determined distance the greater the light intensity and vice versa.

The communication module 10 may be configured to receive via the direct wireless communication A from the device 20 information on at least one of an identity of the device 20, an identity of a person associated with the device 20, and desired parameters of a light emission of the lighting system 100. The device 20 may be a user device. Optionally, the device 20, e.g. being a user device, may be a mobile device, i.e. it may be moved, for example worn on the body, in a bag, at clothes, carried by a person etc. For example, the user device may be a tablet, a mobile telephone, a smartphone, a laptop, a smart watch etc. Alternatively, the device 20 may be part of a vehicle, such as a car, motorbike, a forklift, lawnmower etc., or another movable object.

The information on the identity of the device 20 may indicate or be at least one of the type of device 20 or the vehicle, of which the device is optionally part, a series number or group number of the device 20 or the vehicle, of which the device is optionally part etc. The identity of the person may be name of the person, a number (e.g. individual or group number) associated to the person, type of person (e.g. shop owner, customer, security person etc.) etc. For example, the person may be associated with the device in that the device is owned by the person and/or carried by the person. This may be the case e.g. when the device is a mobile device carried by the person. The desired parameters of the light emission may be or may comprise at least one of one or more light emission patterns, one or more light emission transition times, one or more light intensities, one or more light emission colors, one or more light emission types (e.g. constant, pulsed etc.) etc. The present invention is not limited to specific parameters of light emission and, thus, any parameters of light emission may be used.

The control unit 12 of the communication module 10 may be configured to output to the lighting system 100 at least one of at least a part of the received information C, and a control command that depends on at least a part of the received information.

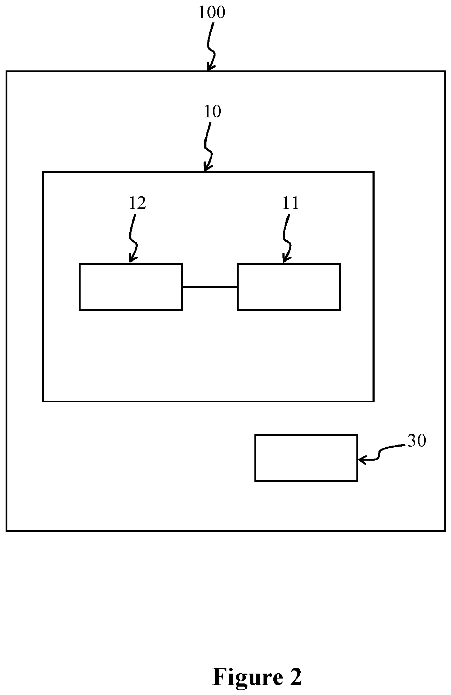

**FIG. 2** shows an example of a lighting system according to an embodiment of the present invention for a lighting system. The lighting system of FIG. 2 is an example of the lighting system according to the second aspect of the present invention. Thus, the description of the lighting system according to the second aspect is correspondingly valid for the lighting system of FIG. 2.

As shown in FIG. 2, the lighting system 100 comprises the communication module 10 of FIG. 1, as described above, and one or more light sources 30. The description of Figure 1 is correspondingly valid for the lighting system 100, especially the communication module 10, of FIG. 2. The lighting system 100 may be for example a luminaire. In this case the communication module 10 and the one or more light sources 30 may be arranged at least partly in a housing of the luminaire and/or at least partly on the housing of the luminaire. The one or more light sources 30 may be one or more light emitting diodes (LEDs). Multiple light sources, such as multiple LEDs, may be electrically connected in parallel and/or in series. Alternatively, the lighting system 100 may comprise a bus, such as a DALI or DALI-2 bus, and one or more luminaires connected to the bus. That is, the one or more light sources 30 of the lighting system 100 may be one or more luminaires, which are optionally connected to a bus (e.g. DALI or DALI-2 bus). The communication module may be connected to the bus or to one of the one or more luminaires (not shown in FIG. 2). The one or more luminaires may be arranged in an indoor or outdoor area. They may be distributed in the area. Optionally, the lighting system may comprise one or more luminaires as the one or more light sources 30. The present invention is not limited to specific type of light sources and, thus, any known light source(s) may be used.

Especially, when the lighting system 100 is a luminaire, then the present invention is not limited to a specific type of luminaire and any known type of luminaire, such as indoor luminaire (e.g. ceiling luminaire, spotlight luminaire, wall luminaire, floor luminaire, table luminaire, stand-alone luminaire, head light, emergency luminaire etc.) or outdoor luminaire (e.g. street luminaire, stadium luminaire etc.) may be used. The present invention is not limited to a specific light source and, thus, any known type of light source may be used, such as luminaire(s), lamp(s) (e.g. LEDs, halogen bulbs, fluorescent lamps etc.) etc. The present invention is not limited to a specific lighting system and, thus, the lighting system 100 may be any known lighting system comprising one or more light sources for light emission.

The communication module 10 may be configured to communicate with at least one of the one or more light sources 30. The communication may be wired and/or wireless. The present invention is not limited to a specific communication type for the communication between the communication module 10 and the one or more light sources 30.

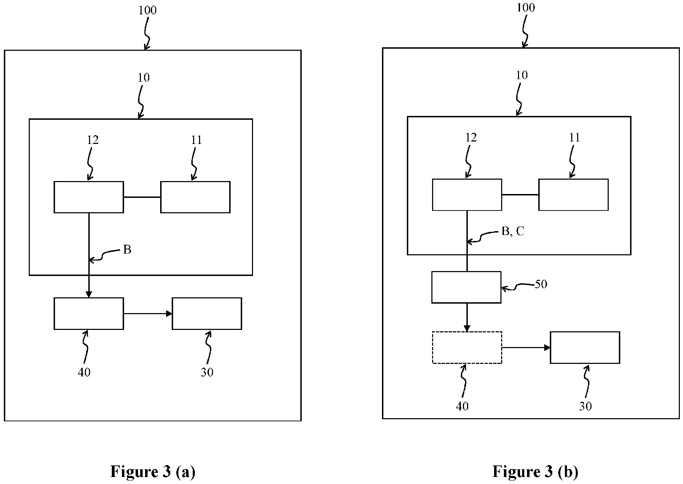

With regard to FIGs. 3 (a) and 3 (b) optional implementation forms of the lighting system 100 are described.

**FIG. 3 (a)** shows an example of the lighting system of FIG. 2. In the following mainly an optional feature of the lighting system of FIG. 2 is described. The description of FIG. 2 is correspondingly valid for the lighting system of FIG. 3 (a).

As shown in FIG. 3 (a), the lighting system 100 may comprise one or more operating devices 40 for operating the one or more light sources 30. Operating the one or more light sources 30 means providing an electrical supply to the one or more light sources 30 and thereby controlling the light emission of the one or more light sources 30. For example, one operating device 40 may be configured to operate one or more light sources 30. In the case of more than one operating devices 40 and multiple light sources 30, an operating device may be configured to operate one respective light source or two or more light sources of the multiple light sources 30. The present invention is not limited to a specific number of operating devices and light sources. In case of an operating device 40 being configured to operate one or more LEDs as one or more light sources 30, the operating device may be referred to as "LED operating device". The control unit 12 of the communication module 10 may be configured to output to the one or more operating devices 40 a control command to control the one or more operating devices 40, in response to determining the presence of the device 20. By outputting the control command to the one or more operating devices 40 the electrical supply provided by the one or more operating devices to the one or more light sources 30 may be controlled and thereby the light emission of the one or more light sources 30 may be controlled.

**FIG. 3 (b)** shows an example of the lighting system of FIG. 2. In the following mainly an optional feature of the lighting system of FIG. 2 is described. The description of FIG. 2 is correspondingly valid for the lighting system of FIG. 3 (b). As shown in FIG. 3 (b), the lighting system 100 may comprise a control unit 50 for controlling the one or more light sources 30. For example, in case the one or more light sources 30 are one or more luminaires the control unit 50 may be a central control unit 50 for controlling the one or more luminaires. Optionally, the lighting system 100 may comprise one or more operating devices 40 (which are indicated by a dashed box in FIG. 3 (b)). The description with regard to the operating device(s) of FIG. 3 (a) is correspondingly valid.

Optionally, the lighting system 100 may be a luminaire and the control unit 50 may be the control unit of the luminaire. Optionally, the control unit 50 and the one or more operating devices 40 may be arranged in a housing of the luminaire (optionally at least partly arranged in the housing). The control unit 12 of the communication module 10 may be configured to output, to the control unit 50 of the lighting system 100, at least one of a control command and an information on the determined presence of the device 20, in response to determining the presence of the device 20.

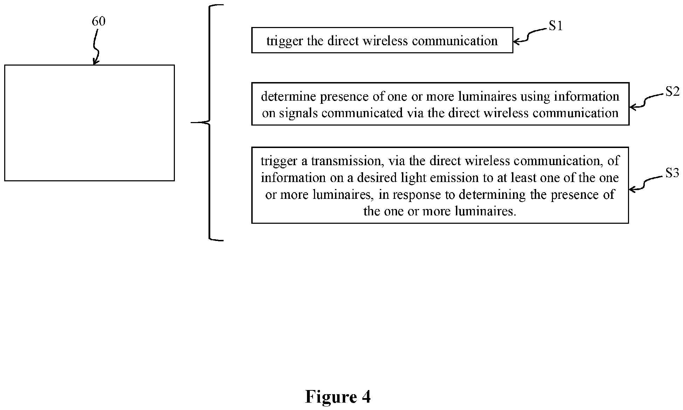

**FIG. 4** shows an example of an entity according to an embodiment of the present invention for a direct wireless communication between two devices. The entity of FIG. 4 is an example of the entity according to the third aspect of the present invention. Thus, the description of the entity according to the third aspect is correspondingly valid for the entity of FIG. 4.

The entity 60 of FIG. 4 is an entity for a direct wireless communication between two devices. Optionally, the entity 60 may be a device, such as the device 20 of FIG. 1, that is configured to communicate via a direct wireless communication, e.g. with the communication module 100 of FIG. 1. Optionally, the entity 60 may be software, such as an application (app), that may be provided in a device, such as the device 20 of FIG. 1, for allowing the device 20 to communicate via a direct wireless communication, e.g. with the communication module 100. For example, the entity 60 is a software that is configured to be performed on a user device comprising a communication unit for the direct wireless communication. For example, the software may be an application (i.e. app). The user device may be a mobile device, i.e. it may be moved, for example worn on the body, in a bag, at clothes, carried by a person etc. For example, the user device may be a tablet, a mobile telephone, a smartphone, a laptop, a smart watch etc.

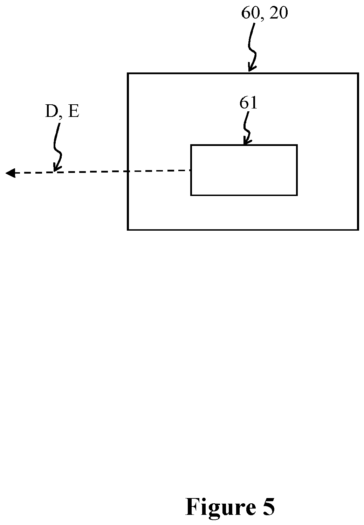

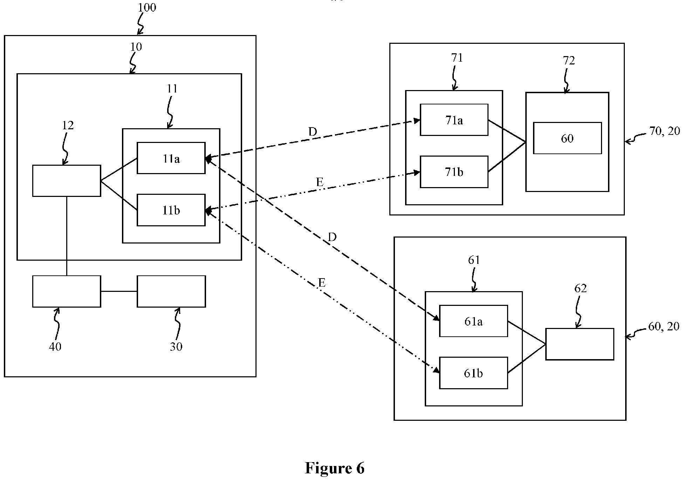

FIG. 6 shows an example of the entity 60 being a device 20 configured for direct wireless communication (e.g. an example of the device 20 of FIG. 1) and an example of the entity 60 being software (e.g. an app) of a device 70 that is configured to communicate via a direct wireless communication. FIG. 5 shows an example of the entity 60 being a device 20 configured for direct wireless communication.

The entity 60 of FIG. 4 is configured to trigger the direct wireless communication. This is indicated in FIG. 4 as a method step S1. The entity 60 is configured to determine presence of one or more luminaires using information on signals communicated via the direct wireless communication. This is indicated in FIG. 4 as a method step S2. The entity 60 is configured to trigger a transmission, via the direct wireless communication, of information on a desired light emission to at least one of the one or more luminaires, in response to determining the presence of the one or more luminaires. This is indicated in FIG. 4 as a method step S3.

The entity 60 may be configured to trigger as the direct wireless communication at least one of UWB communication and Bluetooth communication. The description provided above with regard to direct wireless communication, especially UWB and/or Bluetooth communication, is correspondingly valid. The entity 60 may be configured to determine, using the information on signals communicated via the direct wireless communication, a closest visible luminaire of the one or more luminaires. The entity 60 may be configured to trigger a transmission, via the direct wireless communication, of the information on the desired light emission to the determined closest visible luminaire. Optionally, instead of the closest visible luminaire, one or more luminaires within a radius. The description with regard to the closest visible luminaire is accordingly valid.

**FIG. 5** shows an example of the entity of FIG. 4. In the following mainly an optional feature of the entity of FIG. 4 is described. The description of FIG. 4 is correspondingly valid for the entity of FIG. 5.

According to FIG. 5, the entity 60 is a device comprising a communication unit 61 for the direct wireless communication. The device 60 of FIG. 5 may be the device 20 of FIG. 1. The device 60 may optionally be configured to wirelessly communicate using Bluetooth communication and/or UWB communication. For example, the entity 60 (e.g. a control unit of the device 60, not shown in FIG. 5) may be configured to trigger the communication unit 61 to transmit Bluetooth signals D. In addition or alternatively, the entity 60 (e.g. a control unit of the device 60, not shown in FIG. 5) may be configured to trigger the communication unit to transmit UWB signals E to the one or more luminaires

**FIG. 6** shows an example of the communication module of FIG. 1 and the lighting system of FIG. 2 as well as examples of the entity of FIG. 4. The description of FIGs. 1 to 5 is correspondingly valid for the communication module, lighting system and entity of FIG. 6.

For example, the lighting system 100 of FIG. 6 may be a luminaire that comprises the communication module 10 according to the present invention, one or more light sources 30 and an operating device 40 for operating (i.e. electrically supplying) the one or more light sources 30. This is only by way of example and, thus, the lighting system 100 may be different. The following description is correspondingly valid in case the lighting system 100 is different. In FIG. 6 only one luminaire 100 is shown. Optionally multiple of such luminaire 100 may be present. The description with regard to the luminaire 100 shown in FIG. 6 is correspondingly valid for one or more other luminaires 100 that may be also present (not shown in FIG. 6). The communication unit 11 of the communication module 10 may be configured to wirelessly communicate using as the direct wireless communication Bluetooth communication and/or UWB communication. For this, the communication unit 11 may comprise a Bluetooth communication module 11a and/or UWB communication module 11b, respectively. Further details of the communication module 10 with regard to elements used for the Bluetooth and/or UWB communication, such as one or more Bluetooth antennas, one or more UWB antennas etc., are not shown in FIG. 6.

FIG. 6 shows an example of the entity 60 according to the present invention that is a device 20 configured for direct wireless communication. That is, the entity 60 according to the present invention may be a dedicated device 20 that is implemented such that it is configured to wirelessly communicate using the direct wireless communication with the communication module 10 according to the present invention and, thus, may be detected by the communication module 10. This allows the communication module 10 to determine presence of the device 20 using the direct wireless communication and optionally determine a distance (from the communication module 10) to the device 20 using the direct wireless communication. The dedicated device 20 may be installed at a vehicle, such as a forklift, or may be a mobile device that may be arranged at a person (e.g. a bracelet or name plate provided to a visitor to an area where the lighting is provided according to the present invention).

Optionally, the device 20 may be configured to be an initiator of the direct wireless communication with the communication module 10 by transmitting a wireless signal to the communication module 10, wherein said wireless signal initiates the direct wireless communication between the communication module 10 and the device 20. Thus, the control unit 12 of the communication module 10 may be configured to determine the presence of the device 20 in response to the communication unit 11 of the communication module 10 receiving the wireless signal initiating the direct wireless communication with the device 20. Optionally, the communication module 10 may be configured to be an initiator of the direct wireless communication with the device 20 by transmitting a wireless signal to the device 20, wherein said wireless signals initiates the direct wireless communication between the communication module 10 and the device 20. In this case, the device 20 may be configured to respond to receiving the initiating signal received from the communication module 10 by transmitting a corresponding response, e.g. an acknowledgement signal. Thus, the control unit 12 is configured to determine presence of the device 20 in response to the communication unit 11 establishing the direct wireless communication with the device 20, e.g. receiving the aforementioned response, such as the acknowledgement signal, from the device 20.

As shown in FIG. 6, the device 20 may comprise a communication unit 61 for the direct wireless communication and a control unit 62 for controlling the elements of the device 20, such as the communication unit 61 and, thus, the direct wireless communication. The communication unit 61 of the device 20 may be implemented in line with the communication unit 11 of the communication module 10. The communication unit 61 of the device 20 may be configured to wirelessly communicate using as the direct wireless communication Bluetooth communication and/or UWB communication. For this, the communication unit 61 may comprise a Bluetooth communication module 61a and/or UWB communication module 61b, respectively. Further details of the device 20 with regard to elements used for the Bluetooth and/or UWB communication, such as one or more Bluetooth antennas, one or more UWB antennas etc., are not shown in FIG. 6. The device 20 configured to communicate via the direct wireless communication may be differently implemented. The description of FIG. 6 is correspondingly valid in such a case. For example, the device 20 may be part or arranged on a vehicle, such as a forklift, or another moving object, such as carried by a person. This allows the communication module 10 to determine the presence of the vehicle (e.g. forklift) or the other moving object (e.g. person) by determining the presence of the device 20 using the direct wireless communication and optionally to determine a distance to the vehicle (e.g. forklift) or the other moving object (e.g. person) by determining the distance to the device 20 using the direct wireless communication.

The device 20, especially the control unit 62, is configured to trigger the direct wireless communication, i.e. control the communication unit 61 for the direct wireless communication. The device 20, especially the control unit 62, is configured to determine presence of one or more luminaires, such as the luminaire 100 of Fig. 6, using information on signals communicated via the direct wireless communication (between the communication unit 61 of the device 20 and the communication unit 11 of the communication module 10 of the luminaire 100). The device 20, especially the control unit 62, is configured to trigger a transmission, via the direct wireless communication, of information on a desired light emission to the luminaire 100, in response to determining the presence of the luminaire 100. That is, the device 20, especially the control unit 62, may control the communication unit 61 to wirelessly transmit, using the direct wireless communication, information on the desired light emission to the luminaire 100, in response to determining the presence of the luminaire 100.

In case multiple luminaries 100 are present (not shown in FIG. 6), the device 20, especially the control unit 62, may determine presence of the multiple luminaires 100 using information on signals communicated via the direct wireless communication (between the communication unit 61 of the device 20 and the luminaires 100). The device 20, especially the control unit 62, may trigger a transmission, via the direct wireless communication, of information on a desired light emission to at least one of the luminaires 100, in response to determining the presence of the luminaires 100. Optionally, the device 20, especially the control unit 62, is configured to determine, using the information on signals communicated via the direct wireless communication, a closest visible luminaire of the luminaires 100. The device 20, especially the control unit 62, may be configured to trigger a transmission, via the direct wireless communication, of the information on the desired light emission to the determined closest visible luminaire. That is, the device 20, especially the control unit 62, may control the communication unit 61 to wirelessly transmit, using the direct wireless communication, the information on the desired light emission to the determined closest visible luminaire. Optionally, instead of the closest visible luminaire one or more luminaires within a radius around the entity may be determined using the direct wireless communication. The description with regard to the closest visible luminaire is accordingly valid.

Further, FIG. 6 shows an example of the entity 60 being software (e.g. an app) that is configured to be performed on a user device 70 comprising a communication unit 71 for the direct wireless communication. This allows configuring an usual user device 70, such as a tablet, mobile telephone, a smartphone, a laptop, a smart watch etc., to be configured by installing the software 60 on it so that the communication module 10 may, using the direct wireless communication, determine the presence of the user device 70 and, thus, e.g. presence of a person carrying the user device 70 and optionally the distance to the user device 70 and, thus, e.g. to the person carrying the user device

As shown in FIG. 6, the user device 70 may comprise the communication unit 71 for the direct wireless communication and a control unit 72 for controlling the elements of the user device 70, such as the communication unit 71 and, thus, the direct wireless communication. The control unit 72 may be programmed by the software 60 in order to perform the functions described above with regard to the entity of the third aspect and the entity of FIG. 4. The communication unit 71 of the user device 70 may be implemented in line with the communication unit 11 of the communication module 10. The communication unit 71 of the user device 70 may be configured to wirelessly communicate using as the direct wireless communication Bluetooth communication and/or UWB communication. For this, the communication unit 71 may comprise a Bluetooth communication module 71a and/or UWB communication module 71b, respectively. Further details of the user device 70 with regard to elements used for the Bluetooth and/or UWB communication, such as one or more Bluetooth antennas, one or more UWB antennas etc., are not shown in FIG. 6. The user device 70 configured to communicate via the direct wireless communication may be differently implemented. The description of FIG. 6 is correspondingly valid in such a case.

Optionally, the user device 70 may be configured to be an initiator of the direct wireless communication with the communication module 10 by transmitting a wireless signal to the communication module 10, wherein said wireless signals initiates the direct wireless communication between the communication module 10 and the user device 70. Thus, the control unit 12 of the communication module 10 may be configured to determine the presence of the user device 70 in response to the communication unit 11 of the communication module 10 receiving the wireless signal initiating the direct wireless communication with the device. Optionally, the communication module 10 may be configured to be an initiator of the direct wireless communication with the user device 70 by transmitting a wireless signal to the user device 70, wherein said wireless signal initiates the direct wireless communication between the communication module 10 and the user device 70. In this case, the user device 70 may be configured to respond to receiving the initiating signal received from the communication module 10 by transmitting a corresponding response, e.g. an acknowledgement signal. Thus, the control unit 12 is configured to determine presence of the user device 70 in response to the communication unit 11 establishing the direct wireless communication with the user device 70, e.g. receiving the aforementioned response, such as the acknowledgement signal, from the user device 70. The software 60 may program the user device 70, especially the control unit 72, so that the user device 70 is configured as described herein.

The software 60 and, thus, the control unit 72 is configured to trigger the direct wireless communication, i.e. control the communication unit 71 for the direct wireless communication. The software 60 and, thus, the control unit 72 is configured to determine presence of one or more luminaires, such as the luminaire 100 of Fig. 6, using information on signals communicated via the direct wireless communication (between the communication unit 71 of the user device 70 and the communication unit 11 of the communication module 10 of the luminaire 100). The software 60 and, thus, the control unit 72 is configured to trigger a transmission, via the direct wireless communication, of information on a desired light emission to the luminaire 100, in response to determining the presence of the luminaire 100. That is, the software 60 and, thus, the control unit 72 may control the communication unit 71 to wirelessly transmit, using the direct wireless communication, information on the desired light emission to the luminaire 100, in response to determining the presence of the luminaire 100.

In case multiple luminaries 100 are present (not shown in FIG. 6), the software 60 and, thus, the control unit 72 may determine presence of the multiple luminaires 100 using information on signals communicated via the direct wireless communication (between the communication unit 71 of the user device 70 and the luminaires 100). The software 60 and, thus, the control unit 72 may trigger a transmission, via the direct wireless communication, of information on a desired light emission to at least one of the luminaires 100, in response to determining the presence of the luminaires 100. Optionally, the software 60 and, thus, the control unit 72 is configured to determine, using the information on signals communicated via the direct wireless communication, a closest visible luminaire of the luminaires 100. The software 60 and, thus, the control unit 72 may be configured to trigger a transmission, via the direct wireless communication, of the information on the desired light emission to the determined closest visible luminaire. That is, the software 60 and, thus, the control unit 72 may control the communication unit 71 to wirelessly transmit, using the direct wireless communication, the information on the desired light emission to the determined closest visible luminaire. Optionally, instead of the closest visible luminaire one or more luminaires within a radius around the user device 70 may be determined. The description with regard to the closest visible luminaire is accordingly valid.

When the communication module 10 and the device 20 are configured to communicate using Bluetooth communication, then they may transmit and receive Bluetooth signals D for communicating with each other, as indicated in FIG. 6. Accordingly, when the communication module 10 and the device 20 are configured to communicate using UWB communication, then they may transmit and receive UWB signals E for communicating with each other, as indicated in FIG. 6. The same is valid for the user device 70. That is, when the communication module 10 and the user device 20 are configured to communicate using Bluetooth communication, then they may transmit and receive Bluetooth signals D for communicating with each other, as indicated in FIG. 6. Accordingly, when the communication module 10 and the user device 70 are configured to communicate using UWB communication, then they may transmit and receive UWB signals E for communicating with each other, as indicated in FIG. 6.

The following description may be valid for the dedicated device 20 (being an example of the entity of the present invention) as well as the user device 70 that is programmed by the software 60 (being another example of the entity of the present invention) and, thus, in the following the term "communication device" is used for referring to the dedicated device 20 and the user device 70.

The communication unit 61, 71 of the communication device may be configured to wirelessly communicate using Bluetooth communication. The communication device, especially the control unit 62, 72, may be configured to trigger the communication unit 61, 71 to transmit Bluetooth signals D, and determine presence of one or more luminaires, such as the luminaire 100 shown in FIG. 6, using information on received Bluetooth signals D. These Bluetooth signals D may have been transmitted by the one or more luminaires, e.g. in response to receiving Bluetooth signals D from the communication device. The communication device, especially the control unit 62, 72, may be configured to trigger the communication unit 61, 71 to transmit the information on the desired light emission to at least one of the one or more luminaires, in response to determining the presence of the one or more luminaires. Optionally, the communication device, especially the control unit 62, 72, determines the closest visible luminaire of the one or more luminaires using the information on the received Bluetooth signals. For this, the communication device, especially the control unit 62, 72, may be configured to determine, using the information on the received Bluetooth signals, the distances to the one or more luminaires and determine the luminaire, to which the distance is smallest among the determined distances, to be the closest visible luminaire. In the aforementioned case, the communication device, especially the communication unit 61, 71, optionally is not configured for UWB communication, e.g. does not comprise the UWB communication module 61b, 71b. Thus, the Bluetooth communication may be used for determining presence of the communication module 10 and, thus, a luminaire comprising the communication module 10. Optionally, the Bluetooth communication may be used for determining the distance to the communication module 10 and, thus, the luminaire comprising the communication module 10. Optionally, instead of the closest visible luminaire one or more luminaires within a radius around the communication device may be determined. The description with regard to the closest visible luminaire is accordingly valid.

Optionally, the communication unit 61, 71 of the communication device is configured to wirelessly communicate using UWB communication and Bluetooth communication, as indicated in FIG. 6. The communication device, especially the control unit 62, 72, may be configured to trigger the communication unit 61, 71 to transmit wireless Bluetooth signals D, and determine presence of one or more luminaires, such as the luminaire 100 shown in FIG. 6, using information on received wireless Bluetooth signals D. These Bluetooth signals D may be transmitted by the one or more luminaires, e.g. in response to receiving Bluetooth signals D from the communication device. The communication device, especially the control unit 62, 72, may be configured to trigger the communication unit 61, 71 to transmit UWB signals E to the one or more luminaires, determine the closest visible luminaire of the one or more luminaires using the information on received UWB signals E, and trigger the communication unit 61, 71 to transmit the information on the desired light emission to the determined closest visible luminaire. For this, the communication device, especially the control unit 62, 72, may be configured to determine, using the information on the received UWB signals E, the distances to the one or more luminaires and determine the luminaire, to which the distance is smallest among the determined distances, to be the closest visible luminaire. The received UWB signals E may have been transmitted by the one or more luminaires, e.g. in response to receiving UWB signals E from the communication device. Thus, the Bluetooth communication may be used for determining presence of objects, such as the one or more luminaires, and the UWB communication may be used for determining the distance to the detected objects. This is advantageous because the UWB communication allows a more accurate distance determination (i.e. distance measurement) compared to the Bluetooth communication. Using the Bluetooth communication for determining the presence allows the UWB communication to be free for other tasks and, thus, allows an improved usage of communication resources. This also allows reducing an energy consumption. Optionally, instead of the closest visible luminaire one or more luminaires within a radius around the communication device may be determined. The description with regard to the closest visible luminaire is accordingly valid.

Optionally, determining the presence of objects, such as one or more luminaires, may be done using the UWB communication. In this case, the above description is correspondingly valid with the Bluetooth signals being replaced by UWB signals. In the aforementioned case, the communication device, especially the communication unit 61, 71, optionally is not configured for Bluetooth communication, e.g. does not comprise the Bluetooth communication module 61a, 71a.

The communication device may comprise a data storage for storing desired parameters of a light emission (i.e. a desired lighting configuration), identity of the device, identity of a person or movable object (e.g. vehicle) carrying the device or on which the device is installed (not shown in FIG. 6). The control unit 62, 72 has access to such data storage. The communication device may comprise an electrical energy storage, such as a battery, optionally a rechargeable battery (not shown in FIG. 6). The communication device may be electrically connected to an external electrical energy supply. The components of the communication device may be partly arranged or may be arranged in a housing of the communication device.

The above description with regard to the communication device is correspondingly valid for the communication module 10. That is the communication module 10 may be configured to determine presence of one or more devices configured for direct wireless communication, such as the device 20 and the user device 70, and distance to the determined one or more devices using Bluetooth communication and/or UWB communication as described above with regard to the communication device. That is, the communication module 10 may determine presence of and distance to one or more devices using Bluetooth communication or UWB communication. Alternatively, the communication module 10 may determine presence of one or more devices using Bluetooth communication and determine distance to the determined one or more devices using UWB communication.

Herein, any device that is mobile and optionally may be carried or worn by a person may comprise a electrical energy storage, such as a battery, optionally a rechargeable battery. A dedicated mobile device may comprise a electrical energy storage, such as a battery, optionally a rechargeable battery, and/or may be electrically supplied from the movable object, e.g. vehicle (such as forklift), where it may be installed. The communication module 10 of the invention may optionally comprise a electrical energy storage, such as a battery, optionally a rechargeable battery. In addition or alternatively, it may be electrically supplied from the lighting system, e.g. luminaire.

The present invention allows setting up lighting arrangements in an area, e.g. indoor area such as a hall, without the need of light switches and presence and/or movement sensors (such as PIR sensors). Namely, installing multiple luminaires that each are equipped with a communication module according to the present invention (such as the luminaire 100 of FIG. 6) allows persons carrying a user device programmed by software (i.e. entity) according to the present invention (such as the user device 70 of FIG. 6) or a dedicated device according to the present invention (such as the device 20 of FIG. 6) entering the area and a lighting inside the area being provided to the person in a customized way, i.e. according to the needs of the person. For example, the luminaires may detect the presence of the person carrying one of the aforementioned devices and optionally the distance to the person. Thus, a luminaire of the luminaires that is closest to the person may emit light in order to ensure sufficient illumination for the person. Alternatively or additional, the aforementioned device being carried by the person may trigger luminaires that are present in a certain radius around the device to emit light. The same may apply to other movable objects, such as vehicles, especially forklifts, which may be equipped with one of the aforementioned devices.

The direct wireless communication allows an authentication by line of sight and, thus, no separate authentication is necessary. That is, a user device configured according to the present invention (i.e. an entity according to the present invention) does not need to authenticate itself to a communication module according to the present invention. This is done by line of sight of the direct wireless communication between them.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A communication module for a lighting system, the communication module comprising
- a communication unit for a direct wireless communication with a device,
- a control unit for controlling the direct wireless communication with the device, wherein
- the control unit is configured to
- determine presence of the device in response to the communication unit establishing the direct wireless communication with the device, and
- output to the lighting system at least one of a control command and an information on the determined presence of the device in response to determining the presence of the device.

2. The communication module according to claim 1, wherein
- the control unit is configured to determine the presence of the device in response to the communication unit receiving a wireless signal initiating the direct wireless communication with the device.

3. The communication module according to claim 1 or 2, wherein
- the control unit is configured to determine a distance to the device using the direct wireless communication with the device, and
- the control unit is configured to output to the lighting system at least one of
- an information on the determined distance,
- a control command in response to the determined distance being smaller than a threshold for the distance, and
- a control command that depends on the determined distance.

4. The communication module according to any one of the previous claims, wherein
- the communication unit is configured to communicate with the device using as the direct wireless communication at least one of UWB communication and Bluetooth communication.

5. The communication module according to any one of the previous claims, wherein
- the communication module is configured to receive via the direct wireless communication from the device information on at least one of
- an identity of the device,
- an identity of a person associated with the device,
- desired parameters of a light emission of the lighting system, and
- the control unit is configured to output to the lighting system at least one of
- at least a part of the received information, and
- a control command that depends on at least a part of the received information.

6. A lighting system comprising
- a communication module according to any one of the previous claims, and
- one or more light sources.

7. The lighting system according to claim 6, wherein
- the lighting system comprise one or more operating devices for operating the one or more light sources, and
- the control unit of the communication module is configured to output to the one or more operating devices a control command to control the one or more operating devices, in response to determining the presence of the device.

8. The lighting system according to claim 6 or 7, wherein
- the lighting system comprises a control unit for controlling the one or more light sources, and
- the control unit of the communication module is configured to output, to the control unit of the lighting system, at least one of a control command and an information on the determined presence of the device, in response to determining the presence of the device.

9. An entity for a direct wireless communication between two devices, wherein the entity is configured to
- trigger the direct wireless communication,
- determine presence of one or more luminaires using information on signals communicated via the direct wireless communication, and
- trigger a transmission, via the direct wireless communication, of information on a desired light emission to at least one of the one or more luminaires, in response to determining the presence of the one or more luminaires.

10. The entity according to claim 9, wherein
- the entity is configured to trigger as the direct wireless communication at least one of UWB communication and Bluetooth communication.

11. The entity according to claim 9 or 10, wherein
- the entity is configured to determine, using the information on signals communicated via the direct wireless communication, a closest visible luminaire of the one or more luminaires and/or one or more luminaires within a radius, and
- trigger a transmission, via the direct wireless communication, of the information on the desired light emission to the determined closest visible luminaire and/or the determined one or more luminaires within the radius.

12. The entity according to any one of claim 9 to 11, wherein
- the entity is a software, such as an app, that is configured to be performed on a user device comprising a communication unit for the direct wireless communication.

13. The entity according to any one of claims 9 to 11, wherein
- the entity is a device comprising a communication unit for the direct wireless communication.

14. The entity according to claim 12 or 13, wherein
- the communication unit is configured to wirelessly communicate using Bluetooth communication, and
- the entity is configured to
- trigger the communication unit to transmit Bluetooth signals,
- determine presence of one or more luminaires using information on received Bluetooth signals, and
- trigger the communication unit to transmit the information on the desired light emission to at least one of the one or more luminaires, in response to determining the presence of the one or more luminaires.

15. The entity according to any one of claims 12 to 14, wherein
- the communication unit is configured to wirelessly communicate using UWB communication and Bluetooth communication, and
- the entity is configured to
- trigger the communication unit to transmit Bluetooth signals,
- determine presence of one or more luminaires using information on received Bluetooth signals,
- trigger the communication unit to transmit UWB signals to the one or more luminaires,
- determine the closest visible luminaire of the one or more luminaires using the information on received UWB signals, and
- trigger the communication unit to transmit the information on the desired light emission to the determined closest visible luminaire.

## Amended claims

### Amended claims in accordance with Rule 137(2) EPC.

1. A communication module for a lighting system, the communication module comprising
- a communication unit for a direct wireless communication with a device,
- a control unit for controlling the direct wireless communication with the device, wherein
- the control unit is configured to
- determine presence of the device in response to the communication unit establishing the direct wireless communication with the device, and
- output to the lighting system at least one of a control command and an information on the determined presence of the device in response to determining the presence of the device; wherein
the communication module is configured to receive via the direct wireless communication from the device information on desired parameters of a light emission of the lighting system, and the control unit is configured to output to the lighting system a control command that depends on at least a part of the desired parameters of a light emission of the lighting system.

2. The communication module according to claim 1, wherein
- the control unit is configured to determine the presence of the device in response to the communication unit receiving a wireless signal initiating the direct wireless communication with the device.

3. The communication module according to claim 1 or 2, wherein
- the control unit is configured to determine a distance to the device using the direct wireless communication with the device, and
- the control unit is configured to output to the lighting system at least one of
- an information on the determined distance,
- a control command in response to the determined distance being smaller than a threshold for the distance, and
- a control command that depends on the determined distance.

4. The communication module according to any one of the previous claims, wherein
- the communication unit is configured to communicate with the device using as the direct wireless communication at least one of UWB communication and Bluetooth communication.

5. The communication module according to any one of the previous claims, wherein
- the communication module is configured to receive via the direct wireless communication from the device information on at least one of
- an identity of the device,
- an identity of a person associated with the device,
- - the control unit is configured to output to the lighting system at least one of
- at least a part of the received information, and
- a control command that depends on at least a part of the received information.

6. A lighting system comprising
- a communication module according to any one of the previous claims, and
- one or more light sources.

7. The lighting system according to claim 6, wherein
- the lighting system comprise one or more operating devices for operating the one or more light sources, and
- the control unit of the communication module is configured to output to the one or more operating devices a control command to control the one or more operating devices, in response to determining the presence of the device.

8. The lighting system according to claim 6 or 7, wherein
- the lighting system comprises a control unit for controlling the one or more light sources, and
- the control unit of the communication module is configured to output, to the control unit of the lighting system, at least one of a control command and an information on the determined presence of the device, in response to determining the presence of the device.

9. An entity for a direct wireless communication between a communication module of a luminaire and a device forming the entity or a device including the entity, wherein the entity is configured to
- trigger the direct wireless communication,
- determine presence of one or more luminaires using information on signals communicated via the direct wireless communication, and
- trigger a transmission, via the direct wireless communication, of information on a desired light emission to at least one of the one or more luminaires, in response to determining the presence of the one or more luminaires.

10. The entity according to claim 9, wherein
- the entity is configured to trigger as the direct wireless communication at least one of UWB communication and Bluetooth communication.

11. The entity according to claim 9 or 10, wherein
- the entity is configured to determine, using the information on signals communicated via the direct wireless communication, a closest visible luminaire of the one or more luminaires and/or one or more luminaires within a radius, and
- trigger a transmission, via the direct wireless communication, of the information on the desired light emission to the determined closest visible luminaire and/or the determined one or more luminaires within the radius.

12. The entity according to any one of claim 9 to 11, wherein
- the entity is a software, such as an app, that is configured to be performed on the device including the entity comprising a communication unit for the direct wireless communication.

13. The entity according to any one of claims 9 to 11, wherein
- the entity is the device forming the entity comprising a communication unit for the direct wireless communication.

14. The entity according to claim 13, wherein
- the communication unit is configured to wirelessly communicate using Bluetooth communication, and
- the entity is configured to
- trigger the communication unit to transmit Bluetooth signals,
- determine presence of one or more luminaires using information on received Bluetooth signals, and
- trigger the communication unit to transmit the information on the desired light emission to at least one of the one or more luminaires, in response to determining the presence of the one or more luminaires.

15. The entity according to any one of claims 13 to 14, wherein
- the communication unit is configured to wirelessly communicate using UWB communication and Bluetooth communication, and
- the entity is configured to
- trigger the communication unit to transmit Bluetooth signals,
- determine presence of one or more luminaires using information on received Bluetooth signals,
- trigger the communication unit to transmit UWB signals to the one or more luminaires,
- determine the closest visible luminaire of the one or more luminaires using the information on received UWB signals, and
- trigger the communication unit to transmit the information on the desired light emission to the determined closest visible luminaire.
